# EUROPEAN PATENT SPECIFICATION

(11) **EP 3 429 121 B1**
(45) Date of publication and mention of the grant of the patent: **06.11.2019**
(21) Application number: 17180837.1
(22) Date of filing: 11.07.2017
(51) Int. Cl.: H04L 9/32, H04L 9/00

(54) **DIGITAL SIGNATURE GENERATION**
ERZEUGUNG EINER DIGITALEN SIGNATUR
GÉNÉRATION DE SIGNATURES NUMÉRIQUES

(43) Date of publication of application: 16.01.2019
(73) Proprietor: Nagravision S.A., 1033 Cheseaux-sur-Lausanne (CH)
(72) Inventor: VILLEGAS, Karine, 1033 Cheseaux-sur-Lausanne (CH); MACCHETTI, Marco, 1033 Cheseaux-sur-Lausanne (CH)
(74) Representative: Hoyng Rokh Monegier LLP

(56) References cited:
- FR-A1- 3 027 752
- JUNFENG FAN ET AL: "State-of-the-art of secure ECC implementations: a survey on known side-channel attacks and countermeasures", HARDWARE-ORIENTED SECURITY AND TRUST (HOST), 2010 IEEE INTERNATIONAL SYMPOSIUM ON, IEEE, PISCATAWAY, NJ, USA, 13 June 2010 (2010-06-13), pages 76-87, XP031710164, ISBN: 978-1-4244-7811-8

## Description

### FIELD

The present disclosure relates to the generation of digital signatures, in particular although not exclusively to signature generation in Digital Signature Algorithm (DSA) and Elliptic Curve Digital Signature Algorithm (ECDSA).

### BACKGROUND

DSA (see FIPS 186-4, Digital Signature Standard (DSS). National Institute of Standards and Technologies edition, July 2013, incorporated by reference herein for details of the conventional implementations of DSA) and ECDSA (see *idem* and Public Key Cryptography For The Financial Services Industry: X9-62-2005 The Elliptic Curve Digital Signature ECDSA, American National Standards Institute edition, November 2005, for details of conventional implementations of EDSA) are examples of a class of digital signature algorithms that rely on a form of the discrete logarithm problem. These algorithms use a group of integers, for example the cyclic group of order o, 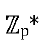 in the case of DSA and the abelian group of points on an elliptic curve over a field F_{q} in the case of ECDSA, for which the m times repeated application of the group operation, or exponentiation, is easier to compute than its inverse, the logarithm. For example, in the case of DSA, the group operation is multiplication modulo p, the repeated operation or exponentiation is x^{k} mod p and the logarithm k is logₓx^{k}. Countermeasures against side-channel attacks on ECDSA implementations are discussed in FR3027752 and Fan, J et al, 2010 IEEE HOST Symposium, pp76-87.

By a suitable choice of parameters, it can be ensured that the computation of the logarithm is computationally difficult to the point of being intractable in practice. This allows these algorithms to define a public key D as the result of the d times repeated application of the group operation, the exponentiation by d, where d is a secret private key used to generate a signature for a message and D can then be used by a recipient of the message to verify the signature. Thus, in these algorithms the discrete logarithm problem - whether in the context of raising a base to a power as in DSA or point multiplication as in ECDSA - see below- is used distribute a public key that can be used to verify a signature generated with a corresponding private key. The mathematical difficulty of the discrete logarithm problem ensures that an attacker cannot gain access to the private key from the data available for signature verification.

An attacker wishing to obtain the private key, for example in order to forge valid signatures apparently coming from the owner of the private key, can attempt to mathematically solve the discrete logarithm problem to recover the private key. Attempts to do so can be foiled by suitable choice of the parameters of the algorithm to ensure that it is computationally not possible to recover the private key in practice. However, even if the owner of the private key is diligent in choosing the parameters of the algorithm, if an attacker has access to a device using the private key to generate a signature, information about the random numbers used in the signature computation, and ultimately the private key, can be gained using physical attacks; if enough information is gained in this way, the private key can be recovered.

Examples of such physical attacks include Side Channel Analysis (SCA) such as Single Power / ElectroMagnetic Attack (SPA/SEMA); Template / Horizontal Attack (TA / HA); and Correlation Power/ElectroMagnetic Attack (CPA; CEMA), Fault Analysis (FA), or both combined . In Cryptography and Security: From theory to Applications, the article from Junfeng Fan,and Ingrid Verbauwhede : An Updated Survey on Secure ECC Implementations: Attacks, Countermeasures and Cost, proposes an overview of possible threats.

Current algorithms implementing digital signatures schemes as for example DSA and ECDSA, exhibit several weaknesses to physical attacks. It would be desirable to generate digital signatures with a reduced vulnerability to such physical attacks.

### BRIEF DESCRIPTION OF THE DRAWINGS

Embodiments will now be described by way of example to illustrate aspects of the disclosure with reference to the accompanying drawings in which:
Figure 1 illustrates a digital signature generation algorithm based on operations in a group;
Figure 2 illustrates a corresponding digital signature verification algorithm;
Figure 3 illustrates a modification of the digital signature generation algorithm;
Figure 4 illustrates a computing device for implementing disclosed algorithms and methods; and
Figure 5 illustrates a specific implementation of a cryptographic processing circuit.

### DETAILED DESCRIPTION OF EMBODIMENTS

In overview, aspects of the disclosure improve the resilience to physical attacks of digital signature algorithms of the same kind as DSA and ECDSA by rearranging the computations so that secret information like the private key is never processed solely with non-secret information like the message to be signed, a hash of the message to be signed or a part of the signature output. In some embodiments, additionally, an ephemeral key, a random number used in the algorithm and generated afresh for each signature, is manipulated so that the actual value underlying the computations is in effect never used. Individually and in combination, these measures ensure that private data is only used in combination with random numbers, so that the vulnerability to physical attacks is reduced. The method comprises computing a signature (r,s), wherein s is calculated using three intermediary random variables. The method may also comprise calculating an ephemeral key used in the computation as a product of two random numbers.

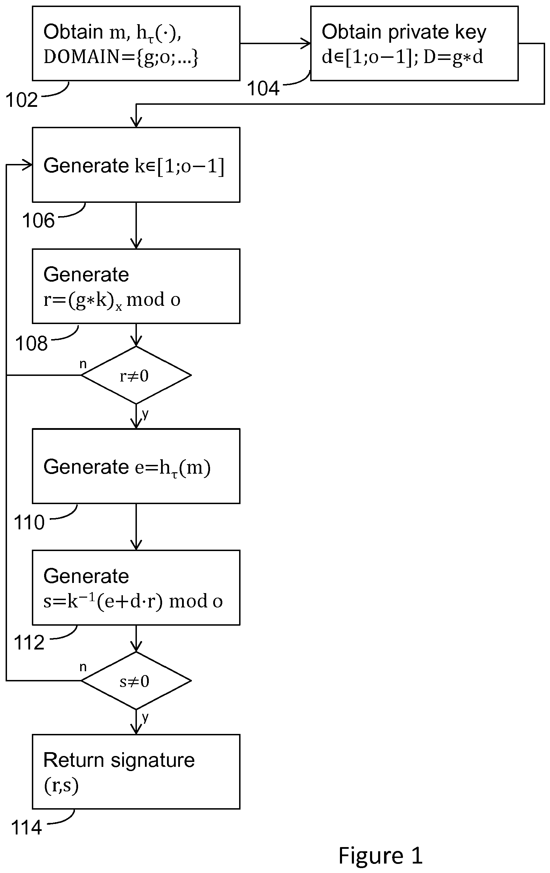

Before discussing these aspects in detail, it will be useful to consider the general class of digital signature algorithms based on operations in algebraic groups, and in particular abelian groups, to which DSA and ECDSA belong. With reference to Figure 1, such algorithms take as input at a first step 102 a message m to be signed, a hash function h_{τ}(·) to be applied to the message, as well as domain parameters including a generator g of the group and the generated group's order o and any other parameters required by the specific algorithm. The hash function h_{τ}(·) is a cryptographic hash function with output bits truncated at the bit length of o. At step 104, the private key d∈[1;o-1] is obtained, noting that the public key of the algorithm is obtained from the private key d by d times application of the group operation to the generator: D=g*d, where *d denotes the group operation applied d times.

At step 106 an ephemeral key k is generated as a random or pseudo-random number with k∈[1;o-1] and a first part r of the digital signature is generated at step 108: r=(g^{∗}k)ₓ mod o, where (g^{∗}k)ₓ is at least a portion of (g*k), for example the x-coordinate of this point in ECDSA, or (g*k) itself in the case of DSA - see below for a detailed description of the correspondence between the generalised algorithm being described and DSA and ECDSA. If r is zero a new k is generated, otherwise a digest e of the message m is generated at step 110: e=h_{τ}(m) and a second part s of the digital signature is generated at step 112: s=k⁻¹ (e+d·r) mod o, where k⁻¹ is the modular inverse of k. Unless s is zero, in which case the algorithm starts again at step 106 to generate a different k-, the digital signature (r,s) comprising both parts r and s is returned.

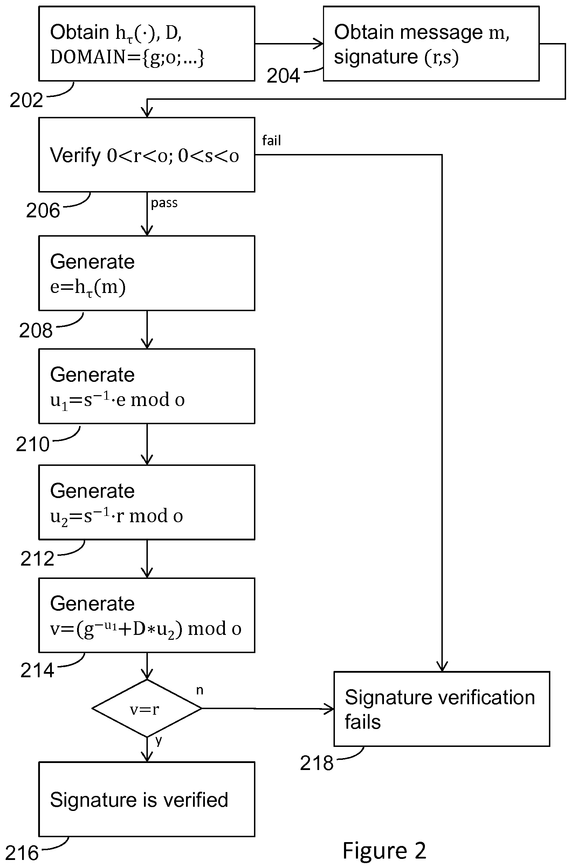

With reference to Figure 2, the corresponding generalised signature verification algorithm comprises first steps 202 and 204 at which the hash-function h_{τ}(·), public key D, domain parameters and the message m and signature (r,s), respectively, are obtained. Step 206 verifies that r and s are within range and terminates the verification with a verification failure at step 218 if not. Otherwise, the digest e is generated from the message m using the hash function at step 208. The inverse of the first part of the signature is used to calculate intermediate variables u₁ and u₂ at respective steps 210 and 212 by multiplication modulo o with, respectively, e and r. A verification variable v is generated from u₁ and u₂ at step 214, as detailed in Figure 2. If the verification variable matches r, then the signature is verified at step 216, for example by returning an appropriate flag; else signature verification fails at step 218.

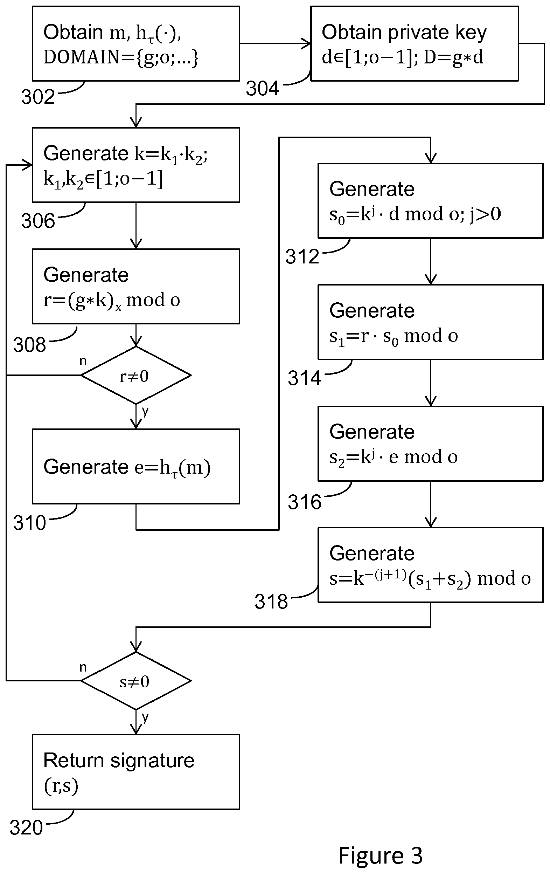

With reference to Figure 3, in some embodiments, steps 106 and 112 are modified as will now be described to make it harder to obtain information about secret information, in particular the private key d, using physical attacks. It will be understood that each modification itself improves the resilience to attack and that they can be combined to further improve the resilience. Thus, embodiments encompass modified algorithms with only step 106 modified, only step 112 modified or both steps modified. In the interest of conciseness only the latter will be described in detail now, the remaining embodiments simply being obtained by omitting one or the other modification. Steps 102, 104, 108 and 110 are not modified and so the corresponding steps 302, 304, 308 and 310 are not described again. Equally, the signature verification algorithm described above with reference to Figure 2 remains applicable. It will be appreciated that the steps of the method can be re-ordered to make physical attacks more difficult by implementing logically related computations at different times or grouped in different locations, for example.

In some embodiments, then, step 106 is modified in that at step 306 two random or pseudo-random numbers k₁,k₂∈[1;o-1] are generated and the ephemeral key k is computed as the product of these two random numbers. This makes an FA attack less likely to succeed as the random number generator would have to be manipulated twice to reduce the entropy of the resulting k. Likewise, this would also increase the number of bits to be recovered using SPA/SEMA, as well as the number of bits that would need to be recovered using one trace of SPA/TA. In fact, in both cases more than half the bits of k would need to be recovered from step 308 to break the private key that is more bits than the full size of k at step 108. Equally, more bits would need to be retrieved for an attack on step 318 - see below- than for an attack on step 112 described above, again more than the full size of k at step 108.

In some embodiments, step 112 is additionally or instead modified by splitting it into three steps, each in effect calculating a random variable. At step 312 s₀=k^{j} • d mod o is computed, with j a positive integer, for example unity in some embodiments. It can be noted that although the computation involves the secret key d, the result is in effect a random number, due to multiplication with k or an integer power thereof. At step 314, another random variable s₁ = r • s₀ mod o is calculated. The variable s₁ is a random variable since s₀ is a random variable. At step 316, s₂= k^{j} • e mod o is computed, again a random variable due to the multiplication with k^{j}. Finally, at step 318, s₁ and s₂ are used to compute s=k^{-(j+i)}(s₁+s₂) mod o, with k^{-(j+1)} being computed modulo o, for example by using an Extended Euclidian algorithm with k² mod o to find its inverse or computing k^{-(j+1)}=k^{-o-(j+2)} mod o using modular exponentiation and Fermat's theorem. It can be noted that even if the computation of k^{-(j+1)} could be interfered with to produce a constant known to the attacker, step 318 is not anymore exploitable to find d, as s₁ and s₂ are random variables. Further, for the same reason, attacks based on reducing the entropy of k for this stage or on finding r and therefore d in step 112 are not possible with these modified steps.

With s computed at step 318, step 320 corresponds to step 112 and the signature (r,s) is returned if s is non-zero. Otherwise the algorithm restarts at step 306 as described above with reference to Figure 1 and step 106.

The improved resilience to attack of the generalised algorithm described above with reference to Figure 3 is equally applicable to the special cases of DSA, based on the cyclic group 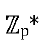 , and ECDSA based on the group of the abelian group of points on an elliptic curve defined over the finite field F_{q}, and the following table sets out the correspondence between the variables, parameters and operations discussed above and the corresponding variables, parameters and operations in DSA and ECDSA, so that the special cases are readily recovered by the person skilled in the art by substituting the respective variables, parameters and operations in the above description as follows:

| | DSA | ECDSA |
|---|---|---|
| Domain parameters DOMAIN | - p - a prime number defining the group 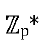 of integers modulo p with the operation of multiplication | - q - characteristic of finite field F_{q}; q is 2^{m} with m a prime number or a prime number >3 |
| | | - a,b - parameters defining an elliptic curve E defined over the finite field F_{q}; a,b ∈ F_{q}xF_{q} |
| | - q - the order of the sub-group defined by the generator a | |
| | | - G - generator point on E |
| | - a - the generator | - n - the order of G |
| | | - h - co-factor h=#E(F_{q})/n; #E(F_{q}) is the number of points on E |
| | | |
| Generator g | a | Point G: (x_{g},y_{g}) on curve E; (x_{g},y_{g}) ∈ F_{q}xF_{q} |
| | | |
| Group order o | q | n |
| Group operation | Modular multiplication with modulo equal to p or q | Point addition of G on E |
| k-times repeated group operation g^{∗}k (exponentiation) | a^{k} mod p | Scalar point multiplication [k]G |
| Component for calculation of r: (g^{∗}k)ₓ | a^{k} mod p | rₓ with [k]G → (rₓ;r_{y}) |
| Public key D for private key d | D=a^{d} mod p | Point on E: D=[d]G or D=[d⁻¹ mod q]G |
| Hash function h_{τ}(·) | Cryptographic hash function truncated at bit length of q | Cryptographic hash function truncated at bit length of n |

Thus, in summary, aspects of the disclosure provide a method of digitally signing a message, the method comprising:
a) obtaining domain parameters defining a group associated with a group operation and generated by a generator of order o, the domain parameters comprising the generator g and the order o;
b) obtaining a private integer key d in the interval [1,o-1], wherein a corresponding public key is the result of applying the group operation to the generator d times;
c) generating a random number k;
d) generating a first signature part r by applying the group operation to the generator g k times and determining the remainder modulo o of at least a part of the result;
e) generating an inverse value k^{-(j+1)} by evaluating the inverse modulo o of k raised to the power of j+1, wherein j is a positive integer, for example unity, and the product of k^{-(j+1)} and k raised to the power of j+1 evaluated modulo o is unity;
f) generating a value s0 by evaluating, modulo o, the product of k raised to the power of j and d;
g) generating a value s1 by evaluating, modulo o, the product of r and s0;
h) generating a message digest value of the message using a cryptographic hash function;
i) generating a value s2 by evaluating, modulo o, the product of k raised to the power of j and the message digest value;
j) generating a second signature part s by evaluating, modulo o, the product of k^{-(j+1)} and the sum of two values s1 and s2; and
k) outputting r and s as the signature, wherein the method comprises ensuring that r and s are non-zero.

In some embodiments, k is generated by generating two random integers k1 and k2, each in the range of [1,o-1] and evaluating the product of k1 and k2.

In some embodiments, j is chosen to be unity, j=1. This setting of j is used, for example, in conventional implementations of DSA and ECDSA. However, it will be appreciated that j may be set to any positive integer. This can be done without affecting signature verification, as step 318 effectively removes any extra exponentiation corresponding to j>1. For example, j may be randomly generated, for example randomly picked from a finite set of J values such as the positive integers up to J: {1;2;3;...;J}. J may be chosen to be any suitable positive integer taking account of processing capacity, for example J=2, J=3 or J=4. The random value of j may of course be chosen in any other suitable way, as well. The value of j may be changed in this way, or based on a fixed schedule or otherwise predetermined schedule. The value of j may be changed between successive repetitions of the signature generation algorithm, every other repetition, every third repetition, or every nth repetition, at certain predetermined times or in any other way. By changing the value of j, the physical fingerprint of the execution of the algorithm changes accordingly. This may help to make side channel attacks more difficult.

In some embodiments, the group may be the set of points generated by the generator g and the group operation on an elliptic curve defined over a finite field F_{q}. In these embodiments, the generator g is a point G on the elliptic curve, the order o is the order n of the group points on the elliptic curve generated by G with the group operation of point addition on the elliptic curve, and the at least part of the result in step d is a coordinate component of the point on the elliptic curve obtained by scalar point multiplication of k with G. In some embodiments, steps a, b, d, and k are implemented in accordance with corresponding steps of ECDSA.

In some embodiments, the group may be a sub-group of order q in the group Zₚ^{*} of positive integers modulo a prime number p, defined by a positive integer base a as the generator g. In these embodiments, the group operation is modular multiplication and the at least part of the result in step d is a^{k} modulo p. In some embodiments steps a, b, d, and k are implemented in accordance with corresponding steps of DSA.

The steps of the method may, in some embodiments, be arranged with a view to resilience to physical attacks or in any other temporal order consistent with the computations or any other distribution between processing components. For example, both of steps f and i may be performed prior to step d and/or step e may be performed prior to step d. One or more of steps e, f and I may be performed using a first processing circuit, performing one or more of the remaining steps using a second processing circuit different from the first circuit.

Aspects of the disclosure further extend to a processor or computing device configured to implement a method as described above. In some embodiments, a first processing circuit is configured to implement one or more of steps e, f and I and a second processing circuit is configured to implement one or more of the remaining steps. Embodiments include, for example, a smart card comprising such a processor and to a media access appliance comprising such a processor. Aspects of the disclosure further extend to a computer program product comprising coded computing instructions that, when run on a processor, implement a method as described above and/or to one or more non-transient computer readable media encoding such instructions.

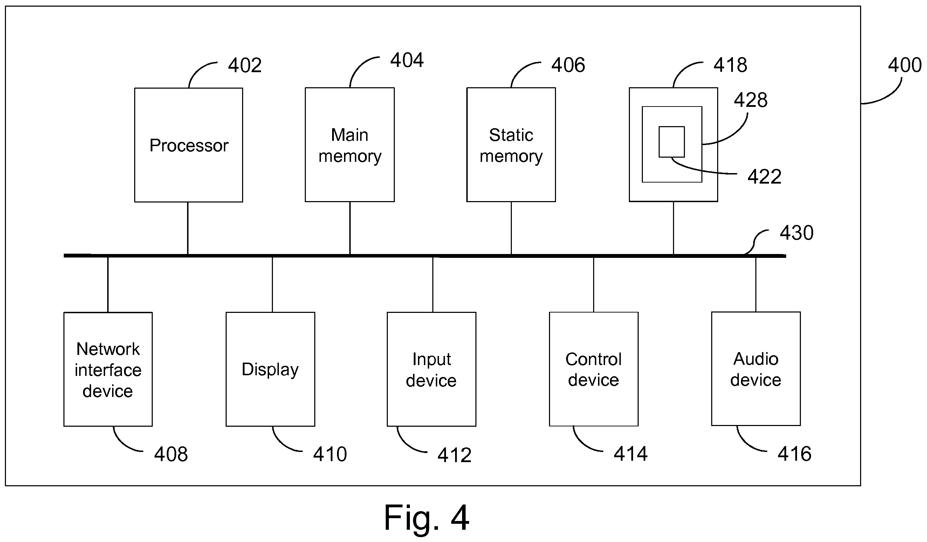

Figure 4 illustrates a block diagram of one implementation of a computing device 400 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein. The computing device may comprise or be embodied in a secure element to provide secure computations isolated from other parts of a computing device in which the secure element is embedded. The computing device may be a system on chip.

The example computing device 400 includes a processing device 402, a main memory 404 (e.g., read-only memory (ROM), flash memory, dynamic random access memory (DRAM) such as synchronous DRAM (SDRAM) or Rambus DRAM (RDRAM), etc.), a static memory 406 (e.g., flash memory, static random access memory (SRAM), etc.), and a secondary memory (e.g., a data storage device 418), which communicate with each other via a bus 430.

Processing device 402 represents one or more general-purpose processors such as a microprocessor, central processing unit, or the like. More particularly, the processing device 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 402 may also be one or more special-purpose processing devices such as an application specific integrated circuit (ASIC), a field programmable gate array (FPGA), a digital signal processor (DSP), network processor, or the like. Processing device 402 is configured to execute the processing logic (instructions 422) for performing the operations and steps discussed herein.

The computing device 400 may further include a network interface device 408. The computing device 400 also may include a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

The data storage device 418 may include one or more machine-readable storage media (or more specifically one or more non-transitory computer-readable storage media) 428 on which is stored one or more sets of instructions 422 embodying any one or more of the methodologies or functions described herein. The instructions 422 may also reside, completely or at least partially, within the main memory 404 and/or within the processing device 402 during execution thereof by the computer system 400, the main memory 404 and the processing device 402 also constituting computer-readable storage media.

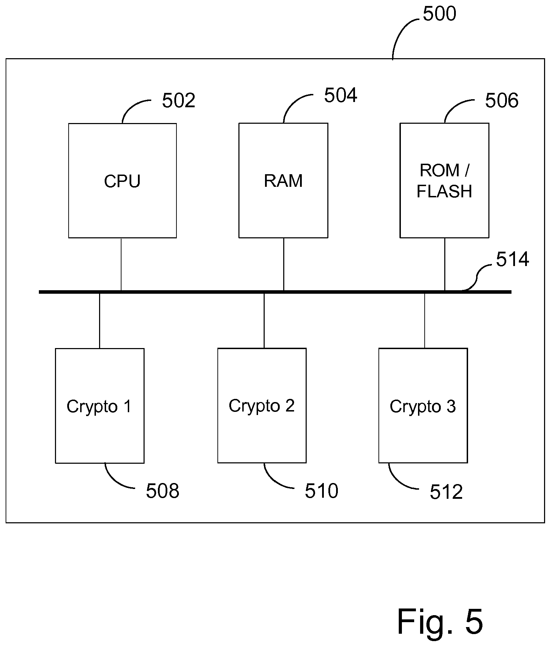

With reference to Figure 5, a specific hardware implementation 500 comprises a CPU 502, RAM 504, ROM or FLASH memory 506 (or any other suitable memory arrangement) and a plurality of (two or more) cryptographic sub-processors or processing circuitry 508, 510, 512, communicating over a bus 514. The implementation 500 may be configured as separate isolated cryptographic processor or secure element, being implemented, for example, within a computing device 400 or as stand-alone, and communicating over a suitable secure interface therewith. Alternatively, the cryptographic sub-processors 508, 510, 512 and/or secure memory components 504 or 506 can be integrated in any other fashion in a computing devices such as computing device 400. Cryptographic processes are distributed between the cryptographic sub-processors 508, 510, 512 under control of the CPU 502 or in a peer to peer arrangement among the sub-processors, with a view to accelerating processing and/or enhancing security. For example, steps of the described methods may be distributed between the processors as described above. For example, steps 306 and 312 may be executed by sub-processor 508, steps 308 and 316 may be executed by sub-processor 510, steps 310 and 312 may be executed by sub-processor 512 and the remaining steps in Figure 3 may be executed by the CPU 502.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as " receiving", "determining", "comparing ", "enabling", "maintaining," "identifying", "computing", "generating", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense.

## Claims

1. A method of digitally signing a message, the method comprising:
a) obtaining (302) domain parameters defining a group associated with a group operation and generated by a generator of order o, the domain parameters comprising the generator g and the order o;
b) obtaining (304) a private integer key d in the interval [1,o-1], wherein a corresponding public key is the result of applying the group operation to the generator d times;
c) generating (306) a random number k;
d) generating (308) a first signature part r by applying the group operation to the generator g k times and determining the remainder modulo o of at least a part of the result;
e) generating an inverse value k^{-(j+1)} by evaluating the inverse modulo o of k raised to the power of j+1, wherein j is a positive integer and the product of k^{-(j+1)} and k raised to the power of j+1 evaluated modulo o is unity;
f) generating (312) a value s0 by evaluating, modulo o, the product of k raised to the power of j and d;
g) generating (314) a value s1 by evaluating, modulo o, the product of r and s0;
h) generating (310) a message digest value of the message using a cryptographic hash function;
i) generating (316) a value s2 by evaluating, modulo o, the product of k raised to the power of j and the message digest value;
j) generating (318) a second signature part s by evaluating, modulo o, the product of k^{-(j+1)} and the sum of two values s1 and s2; and
k) outputting (320) r and s as the signature, wherein the method comprises ensuring that r and s are non-zero.

2. A method according to claim 1, wherein k is generated by generating two random integers k1 and k2, each in the range of [1,o-1] and evaluating the product of k1 and k2.

3. A method according to claim 1 or 2, wherein j is a randomly generated positive integer.

4. A method according to any preceding claim, wherein the group is the set of points on an elliptic curve defined over a finite field F_{q} generated by the generator, the generator g is a point G on the elliptic curve, the order o is the order n of the group points on the elliptic curve generated by G with the group operation of point addition on the elliptic curve, and wherein the at least part of the result in step d is a coordinate component of the point on the elliptic curve obtained by scalar point multiplication of k with G.

5. A method according to any preceding claim, wherein steps a, b, d and k are implemented in accordance with corresponding steps of ECDSA.

6. A method according to any one of claims 1 to 3, wherein the group is a sub-group of order q in the group Zₚ^{*} of positive integers modulo a prime number p, defined by a positive integer base a as the generator g, the group operation is modular multiplication and the at least part of the result in step d is a^{k} modulo p.

7. A method according to any one of claims 1 to 3 and 6, wherein steps a, b, d and k are implemented in accordance with corresponding steps of DSA.

8. A method according to any preceding claims, the method comprising performing one or both of steps f and i prior to step d.

9. A method according to any preceding claims, the method comprising performing step e prior to step d.

10. A method according to any preceding claim, the method comprising performing one or more of steps e, f and I using a first processing circuit (508) and performing one or more of the remaining steps using a second processing circuit (510) different from the first circuit.

11. A processor (400, 500) configured to implement a method according to any preceding claim.

12. A processor according to claim 11, wherein a first processing circuit (508) is configured to implement one or more of steps e, f and I and a second processing circuit (510) is configured to implement one or more of the remaining steps.

13. A smart card comprising a processor according to claim 11 or 12.

14. A media access appliance comprising a processor according to claim 11 or 12.

15. A computer program product comprising coded computing instructions that, when run on a processor, implement a method as claimed in any one of claim 1 to 10.

## Patentansprüche

1. Verfahren zum digitalen Signieren einer Nachricht, wobei das Verfahren umfasst:
a) Erhalten (302) von Domänenparametern, die eine mit einer Gruppenoperation assoziierte Gruppe definieren und von einem Erzeuger der Ordnung o generiert sind, wobei die Domänenparameter den Erzeuger g und die Ordnung o umfassen;
b) Erhalten (304) eines privaten ganzzahligen Schlüssels d im Intervall [1, o-1], wobei ein entsprechender öffentlicher Schlüssel das Ergebnis eines d-maligen Anwendens der Gruppenoperation auf den Erzeuger d ist;
c) Generieren (306) einer Zufallszahl k;
d) Generieren (308) eines ersten Signaturteils r durch k-maliges Anwenden der Gruppenoperation auf den Erzeuger g und Ermitteln des Rests modulo o von mindestens einem Teil des Ergebnisses;
e) Generieren eines Umkehrwerts k^{-(j+1)} durch Auswerten der Umkehrung modulo o von k zur Potenz j+1, wobei j eine positive ganze Zahl ist und das Produkt von k^{-(j+1)} und k zur Potenz von j+1, das modulo o ausgewertet wird, die Eins ist;
f) Generieren (312) eines Werts s0 durch Auswerten, modulo o, des Produkts von k zur Potenz von j und d;
g) Generieren (314) eines Werts s1 durch Auswerten, modulo o, des Produkts von r und s0;
h) Generieren (310) eines Message-Digest-Werts der Nachricht unter Verwendung einer kryptografischen Hashfunktion;
i) Generieren (316) eines Werts s2 durch Auswerten, modulo o, des Produkts von k zur Potenz von j und des Message-Digest-Werts;
j) Generieren (318) eines zweiten Signaturteils s durch Auswerten, modulo o, des Produkts von k^{-(j+1)} und der Summe von zwei Werten s1 und s2; und
k) Ausgeben (320) von r und s als die Signatur, wobei das Verfahren ein Sicherstellen umfasst, dass r und s nicht null sind.

2. Verfahren nach Anspruch 1, wobei k durch Generieren von zwei zufälligen ganzen Zahlen k1 und k2, die jeweils im Bereich von [1, o-1] liegen, und Auswerten des Produkts von k1 und k2 generiert wird.

3. Verfahren nach Anspruch 1 oder 2, wobei j eine zufällig generierte positive ganze Zahl ist.

4. Verfahren nach einem der vorangehenden Ansprüche, wobei die Gruppe die Menge von Punkten auf einer elliptischen Kurve ist, die über einen vom Erzeuger generierten endlichen Körper F_{q} definiert ist, wobei der Erzeuger g ein Punkt G auf der elliptischen Kurve ist, die Ordnung o die Ordnung n der Gruppenpunkte auf der elliptischen Kurve ist, die durch G mit der Gruppenoperation einer Punktaddition auf der elliptischen Kurve generiert sind, und wobei der mindestens eine Teil des Ergebnisses in Schritt d eine Koordinatenkomponente des Punkts auf der elliptischen Kurve ist, der durch Skalarpunktmultiplikation von k mit G erhalten wird.

5. Verfahren nach einem der vorangehenden Ansprüche, wobei die Schritte a, b, d und k in Übereinstimmung mit entsprechenden Schritten von ECDSA implementiert sind.

6. Verfahren nach einem der Ansprüche 1 bis 3, wobei die Gruppe eine Untergruppe der Ordnung q in der Gruppe Zₚ^{*} von positiven ganzen Zahlen modulo einer Primzahl p ist, definiert durch eine positive ganzzahlige Basis a als der Erzeuger g, wobei die Gruppenoperation eine modulare Multiplikation ist und der mindestens eine Teil des Ergebnisses in Schritt d a^{k} modulo p ist.

7. Verfahren nach einem der Ansprüche 1 bis 3 und 6, wobei die Schritte a, b, d und k in Übereinstimmung mit entsprechenden Schritten von DSA implementiert sind.

8. Verfahren nach einem der vorangehenden Ansprüche, wobei das Verfahren ein Durchführen eines oder beider der Schritte f und i vor Schritt d umfasst.

9. Verfahren nach einem der vorangehenden Ansprüche, wobei das Verfahren ein Durchführen von Schritt e vor Schritt d umfasst.

10. Verfahren nach einem der vorangehenden Ansprüche, wobei das Verfahren ein Durchführen eines oder mehrere der Schritte e, f und 1 unter Verwendung eines ersten Verarbeitungsschaltkreises (508) und ein Durchführen eines oder mehrerer der verbleibenden Schritte unter Verwendung eines zweiten, vom ersten Schaltkreis verschiedenen Verarbeitungsschaltkreises (510) umfasst.

11. Prozessor (400, 500), der ausgelegt ist, ein Verfahren nach einem der vorangehenden Ansprüche zu implementieren.

12. Prozessor nach Anspruch 11, wobei ein erster Verarbeitungsschaltkreis (508) ausgelegt ist, einen oder mehrere der Schritte e, f und l zu implementieren, und ein zweiter Verarbeitungsschaltkreis (510) ausgelegt ist, einen oder mehrere der verbleibenden Schritte zu implementieren.

13. Chipkarte, umfassend einen Prozessor nach Anspruch 11 oder 12.

14. Medienzugriffsgerät, umfassend einen Prozessor nach Anspruch 11 oder 12.

15. Computerprogrammprodukt, das codierte Rechenanweisungen umfasst, die, wenn sie auf einem Prozessor laufen, ein Verfahren nach einem der Ansprüche 1 bis 10 implementieren.

## Revendications

1. Procédé de signature numérique d'un message, le procédé comprenant :
a) obtenir (302) des paramètres de domaine définissant un groupe associé à une opération de groupe et généré par un générateur d'ordre o, les paramètres de domaine comprenant le générateur g et l'ordre o ;
b) obtenir (304) une clé privée sous forme de nombre entier d dans l'intervalle [1,o-1], une clé publique correspondante étant le résultat de l'application de l'opération de groupe au générateur d fois ;
c) générer (306) un nombre aléatoire k ;
d) générer (308) une première partie de signature r par application de l'opération de groupe au générateur g k fois et détermination du modulo de reste o d'au moins une partie du résultat ;
e) générer une valeur inverse k^{-(j+1)} par évaluation du modulo inverse o de k élevé à la puissance de j+1, j étant un nombre entier positif et le produit de k^{-(j+1)} et k élevé à la puissance de j+1 évalué modulo o étant unitaire ;
f) générer (312) une valeur s0 par évaluation, modulo o, du produit de k élevé à la puissance de j et d ;
g) générer (314) une valeur s1 par évaluation, modulo o, du produit de r et s0 ;
h) générer (310) une valeur de condensé de message du message à l'aide d'une fonction de hachage cryptographique ;
i) générer (316) une valeur s2 par évaluation, modulo o, du produit de k élevé à la puissance de j et de la valeur de condensé de message ;
j) générer (318) une seconde partie de signature s par évaluation, modulo o, du produit de k^{-(j+1)} et de la somme de deux valeurs s1 et s2 ; et
k) délivrer (320) r et s en tant que signature, le procédé comprenant le fait de garantir que r et s sont non nulles.

2. Procédé selon la revendication 1, dans lequel k est généré par génération de deux nombres entiers aléatoires k1 et k2, chacun dans la plage de [1,o-1] et évaluation du produit de k1 et k2.

3. Procédé selon la revendication 1 ou 2, dans lequel j est un nombre entier positif généré de façon aléatoire.

4. Procédé selon l'une quelconque des revendications précédentes, dans lequel le groupe est l'ensemble de points sur une courbe elliptique définie sur un champ fini F_{q} généré par le générateur, le générateur g est un point G sur la courbe elliptique, l'ordre o est l'ordre n des points de groupe sur la courbe elliptique générée par G avec l'opération de groupe d'addition de point sur la courbe elliptique, et dans lequel l'au moins une partie du résultat à l'étape d est une composante de coordonnée du point sur la courbe elliptique obtenue par multiplication ponctuelle scalaire de k avec G.

5. Procédé selon l'une quelconque des revendications précédentes, dans lequel les étapes a, b, d et k sont mises en œuvre selon des étapes correspondantes de l'algorithme de signature numérique à courbe elliptique, ECDSA.

6. Procédé selon l'une quelconque des revendications 1 à 3, dans lequel le groupe est un sous-groupe d'ordre q dans le groupe Zₚ^{*} de nombres entiers positifs modulo un nombre premier p, défini par une base de nombre entier positif a en tant que générateur g, l'opération de groupe étant une multiplication modulaire et l'au moins une partie du résultat à l'étape d étant a^{k} modulo p.

7. Procédé selon l'une quelconque des revendications 1 à 3 et 6, dans lequel les étapes a, b, d et k sont mises en œuvre selon des étapes correspondantes de l'algorithme de signature numérique, DSA.

8. Procédé selon l'une quelconque des revendications précédentes, le procédé comprenant la réalisation d'une ou des deux étapes f et i avant l'étape d.

9. Procédé selon l'une quelconque des revendications précédentes, le procédé comprenant la réalisation de l'étape e avant l'étape d.

10. Procédé selon l'une quelconque des revendications précédentes, le procédé comprenant la réalisation d'une ou plusieurs des étapes e, f et i à l'aide d'un premier circuit de traitement (508) et la réalisation d'une ou plusieurs des étapes restantes à l'aide d'un second circuit de traitement (510) différent du premier circuit.

11. Processeur (400, 500) configuré pour mettre en œuvre un procédé selon l'une quelconque des revendications précédentes.

12. Processeur selon la revendication 11, dans lequel un premier circuit de traitement (508) est configuré pour mettre en œuvre une ou plusieurs des étapes e, f et i et un second circuit de traitement (510) est configuré pour mettre en œuvre une ou plusieurs des étapes précédentes.

13. Carte à puce intelligente comprenant un processeur selon la revendication 11 ou 12.

14. Appareil d'accès au support comprenant un processeur selon la revendication 11 ou 12.

15. Produit de programme d'ordinateur comprenant des instructions informatiques codées qui, lorsqu'elles sont exécutées sur un processeur, mettent en œuvre un procédé tel que revendiqué à l'une quelconque des revendications 1 à 10.
